# EUROPÄISCHE PATENTSCHRIFT

(11) **EP 3 024 686 B1**
(45) Veröffentlichungstag und Bekanntmachung des Hinweises auf die Patenterteilung: **02.05.2018**
(21) Anmeldenummer: 14728945.8
(22) Anmeldetag: 05.06.2014
(51) Int. Cl.: H01M 8/04007, B60L 11/18, H01M 8/04, B60L 1/00

(54) **ABLUFTFÜHRUNG EINES BRENNSTOFFZELLENSTACKS IN EINEM KRAFTFAHRZEUG**
EXHAUST AIR GUIDE OF A FUEL CELL STACK IN A MOTOR VEHICLE
GUIDAGE DE L'AIR ÉVACUÉ D'UN BLOC DE PILE À COMBUSTIBLE DANS UN VÉHICULE AUTOMOBILE

(30) Priorität: 25.07.2013 DE 102013214602
(43) Veröffentlichungstag der Anmeldung: 01.06.2016
(73) Patentinhaber: Bayerische Motoren Werke Aktiengesellschaft, 80809 München (DE)
(72) Erfinder: HAASE, Stefan, 85247 Schwabhausen (DE); SCHWARZE, Marco, 80687 München (DE); STERZENBACH, Marcel, 84034 Landshut (DE)
(86) Internationale Anmeldenummer: PCT/EP2014/061761
(87) Internationale Veröffentlichungsnummer: WO 2015/010818

(56) Entgegenhaltungen:
- WO-A2-2014/005793
- DE-A1-102008 009 118
- DE-T5-112009 003 549
- DE-T5-112009 003 573
- JP-A- 2002 184 419
- US-A1- 2013 139 997

## Beschreibung

Die Erfindung betrifft die Abluftführung eines Brennstoffzellenstacks, insbesondere in einem Kraftfahrzeug, mit einer zur Funktionsumgebung des Brennstoffzellenstacks gehörenden Kühlvorrichtung in Form einer von Umgebungsluft durchströmten Kühlerstruktur. Zum Stand der Technik wird beispielshalber auf die DE 10 2008 029 529 A1 verwiesen.

Brennstoffzellen, zumindest solche der PEM-Bauart, müssen im Betrieb gekühlt werden, weshalb für einen sog. Brennstoffzellenstack, der durch einen Stapel mehrerer Einzel-Brennstoffzellen gebildet ist, eine geeignete Kühlvorrichtung vorzusehen ist. Eine solche Kühlvorrichtung ist zumeist durch einen Kreislauf für ein Wärmeträgermittel und einen Wärmeübertrager, insbesondere Wärmetauscher, gebildet, in dem umgewälztes Wärmeträgermittel, das im Brennstoffzellenstack Wärme aufnimmt, diese aufgenommene Wärmemenge an einen durch den vorliegend verallgemeinert als Kühlerstruktur bezeichneten Wärmeübertrager, insbesondere Wärmetauscher, hindurchgeführten Umgebungsluftstrom abgibt. Es sind aber auch luftgekühlte Brennstoffzellenstacks bekannt, die selbst eine geeignete Kühlerstruktur bilden bzw. enthalten, an der bzw. durch die ein Umgebungsluftstrom zur Kühlung vorbei bzw. hindurch geführt wird, vgl. hierzu beispielsweise die nicht vorveröffentlichte deutsche Patentanmeldung mit dem Aktenzeichen 10201220645.1. In den meisten Fällen wird dabei für die Förderung des Umgebungsluftstromes durch die Kühlerstruktur - sei es ein eigenständiger Wärmeübertrager (insbesondere Wärmetauscher) oder eine im Brennstoffzellenstack integrierte Kühlerstruktur - eine eigenständige Fördervorrichtung (Gebläse, Ventilator, etc.) benötigt, die teilweise einen relativ hohen Energiebedarf aufweist. Dokument WO 2014/005793 A2 beschreibt eine Abluftführung eines Brennstoffzellenstacks, mit einer zur Funktionsumgebung des Brennstoffzellenstacks gehörenden Kühlvorrichtung in Form einer von Umgebungsluft durchströmten Kühlerstruktur, wobei die Abluft des Brennstoffzellenstacks solchermaßen vor die genannte Kühlerstruktur geführt ist, das diese in Durchströmungsrichtung durch die Kühlerstruktur strömt und dabei nach dem Strahlpumpen-Prinzip Umgebungsluft mitreißt. Dokument DE 10 2008 009118 offenbart ein Brennstoffzellensystem für ein Hybridfahrzeug das eine Batterie umfasst. Die Kathodenabgas-Luftströmung von einem Brennstoffzellenstapel wird verwendet um Luft durch ein Batteriefach zu saugen, um eine Batteriekühlung vorzusehen. Die Strömung des Kathodenabgases durch ein Rohr erzeugt einen Bereich mit niedrigem Druck (Venturi-Effekt), dieser saugt die Luft von dem Fahrgastraum des Hybridfahrzeugs durch eine Leitung, das Batteriesystem, durch eine weitere Leitung und aus dem Rohr heraus. Die Luft des Fahrgastraumes dient als Kühlluft.

Diesbezüglich eine Verbesserung aufzuzeigen, ist Aufgabe der vorliegenden Erfindung.

Die Lösung dieser Aufgabe besteht in einer Abluftführung eines Brennstoffzellenstacks gemäß Anspruch 1. Vorteilhafte Aus- und Weiterbildungen sind Inhalt der Unteransprüche.

Erfindungsgemäß wird die Abluft des Brennstoffzellenstacks - bei PEM-Brennstoffzellen handelt es sich dabei um den Kathoden-Abluftstrom - zumindest anteilig solchermaßen an die Kühlerstruktur herangeführt, dass der Druck bzw. Überdruck dieses Abluftstromes zur Förderung von Umgebungsluft als die Kühlerstruktur durchströmende Kühlluft genutzt wird. Dabei wird das grundlegend bekannte Strahlpumpen-Prinzip (insbesondere bekannt von einer durch eine geeignete Rohr-Zusammenführung gebildeten Saugstrahlpumpe) genutzt. Ausdrücklich sei dabei darauf hingewiesen, dass es an einer erfindungsgemäßen Kühlerstruktur keineswegs erforderlich ist, die Brennstoffzellen-Abluft sowie die Umgebungsluft in einer Rohrstruktur explizit zusammen zu führen; vielmehr ist es ausreichend, wenn die Abluft des Brennstoffzellenstacks geeignet in oder (in Durchströmungsrichtung der Umgebungsluft durch die Kühlerstruktur betrachtet) hinter die Kühlerstruktur geführt ist, beispielsweise in mehreren zumindest annähernd parallel zur Anströmfläche der Kühlerstruktur ausgerichteten Rohren, aus denen die Abluft über Austrittsöffnungen in der Wand dieser Rohre ("Rohrwand"), die unter einem geeigneten Winkel zur Durchströmungsrichtung des (gewünschten) Kühl-Luftstromes durch die Kühlerstruktur hindurch liegen, austritt. Stets lässt sich auf die vorgeschlagene Weise das im Abluftstrom des Brennstoffzellenstacks vorhandene Druck-Potential zur Förderung von Umgebungsluft und somit von Kühlluft durch die Kühlerstruktur nutzen, derart, dass der Abluftstrom eine Erhöhung des Massenstromes von Umgebungsluft hervorruft, verglichen mit demjenigen Umgebungsluft-Massenstrom, der sich ohne erfindungsgemäße Heranführung von Brennstoffzellen-Abluft an die Kühlerstruktur bei ansonsten unveränderten Randbedingungen einstellt.

Was die erfindungsgemäß geführte Brennstoffzellen-Abluft bzw. den besagten Abluftstrom betrifft, so resultiert deren/dessen Druck-Potential bzw. Überdruck aus der zuvor erfolgten Förderung von Umgebungsluft als Reaktionsluft in den Brennstoffzellenstack hinein, die dort an einer der Elektroden - im Falle einer PEM-Brennstoffzelle an den Kathoden - mit dem an die andere Seite der jeweiligen Kathoden-Elektrolyt-Anoden-Einheit herangeführten Brennstoffstrom (insbesondere in Form von Wasserstoff) in bekannter Weise reagiert, um anschließend als Abluftstrom aus dem Brennstoffenzellenstack abgeführt zu werden. Üblicherweise ist die Temperatur und insbesondere der Feuchtigkeitsgehalt der Abluft des Brennstoffzellenstacks gegenüber der den Brennstoffzellen zunächst als Reaktionsluft zugeführten Umgebungsluft erhöht. Im Sinne einer vorteilhaften Weiterbildung der Erfindung kann daher die Abluft des Brennstoffzellenstacks vor der erfindungsgemäßen Heranführung an die Kühlerstruktur in einem geeigneten Wärmeübertrager, insbesondere Wärmetauscher, (vorzugsweise unter abermaliger Zuhilfenahme von Umgebungsluft) abgekühlt werden, wobei vorteilhafterweise Feuchtigkeit auskondensiert, so dass keine ansonsten zumeist feststellbare NebelBildung durch den Abluftstrom des Brennstoffzellenstacks erfolgt.

Im Sinne einer vorteilhaften Weiterbildung der vorliegenden Erfindung kann die Strömungsgeschwindigkeit und/oder die Strömungsrichtung des Brennstoffzellen-Abluftstromes gegenüber der Kühlerstruktur und somit beispielsweise die Ausströmrichtung und/oder die Ausströmgeschwindigkeit der Abluft aus den besagten Rohren und allgemein aus irgendeinem System, über das die Brennstoffzellen-Abluft in erfindungsgemäßer Weise an die Kühlerstruktur heran geführt ist, gezielt veränderbar sein. Beispielsweise können hierfür die Austrittsöffnungen in der Rohrwand der besagten Rohre mittels eines Schiebers oder dgl. veränderbar sein. Mittels Schiebern ist beispielsweise die Querschnittsfläche der besagten Austrittsöffnungen veränderbar, womit sich unterschiedliche Strömungsgeschwindigkeiten für den Brennstoffzellen-Abluftstrom ergeben; durch Schieber oder dergleichen ist aber auch die Strömungsrichtung des Abluftstromes gegenüber der Kühlerstruktur in gewünschter Weise veränderbar. Im Falle der beispielhaft genannten Rohre, durch die die Brennstoffzellen-Abluft in oder hinter die Kühlerstruktur geführt ist, ist es aber auch möglich, das oder die Rohr(e) selbst um ihre Längsachse zu drehen und damit die Strömungsrichtung des aus dem/den Rohr(en) austretenden Abluftstromes gegenüber der Kühlerstruktur zu verändern. Wenn mehrere Rohre vorgesehen sind, durch die die Brennstoffzellen-Abluft an die Kühlerstruktur geführt ist, so können auch einige dieser Rohre in Abhängigkeit von unterschiedlichsten Randbedingungen quasi stillgesetzt, d.h. nicht mit Brennstoffzellen-Abluft beaufschlagt werden, womit der gesamte Abluftstrom auf eine geringere Zahl von Rohren verteilt und damit die Strömungsgeschwindigkeit des Abluftstromes in diesen wenigeren Rohren und folglich auch die Austrittsgeschwindigkeit aus dem Rohr heraus vergrößert wird. An dieser Stelle sei ausdrücklich darauf hingewiesen, dass es keineswegs erforderlich ist, den Brennstoffzellen-Abluftstrom wie fakultativ vorgeschlagen über mehrere Rohre mit in der Rohrwand vorgesehenen Austrittsöffnungen an die Kühlerstruktur heran zu führen; vielmehr können hierfür auch andere Luftführungssysteme zum Einsatz kommen. Dabei ist selbstverständlich abermals eine Steuerung der Massenstrom-Verteilung über geeignete Geometrieanpassungen möglich.

Wenn der Brennstoffzellen-Abluftstrom auf erfindungsgemäße Weise zumindest anteilig in die Kühlerstruktur geleitet wird und es sich bei dieser um einen ansonsten üblichen Fahrzeug-Kühler mit Rohren, welche eine Kühlflüssigkeit führen und an denen Kühlrippen vorgesehen sind, entlang derer die Umgebungsluft als Kühlluft strömt, handelt, so können zur Erzielung einer besonders kompakten Bauweise die den Abluftstrom führenden Rohre mit den die Kühlflüssigkeit führenden Rohrleitungen zumindest abschnittsweise eine Baueinheit bilden, bspw. in Form eines Rohres mit einer längs der Rohrachse verlaufenden Trennwand.

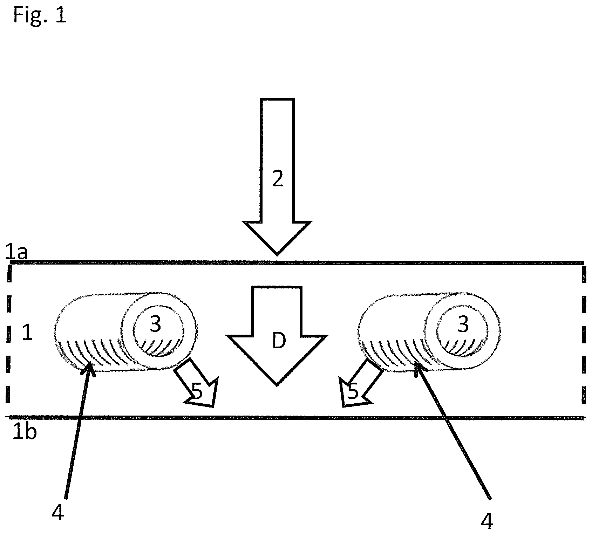

Die beigefügten Prinzipskizzen (Fig.1, Fig.2, Fig.3) zeigen drei Ausführungsbeispiele der Erfindung, wobei in jeder Figur stark abstrahiert eine Aufsicht auf eine Kühlerstruktur 1 mit erfindungsgemäßer Führung der Abluft eines Brennstoffzellen-Stacks dargestellt ist. Die Kühlerstruktur 1 ist im Frontbereich eines nicht dargestellten Kraftfahrzeugs, insbesondere PKW's, integriert, wobei in diesem Kraftfahrzeug ein ebenfalls nicht dargestellter Brennstoffzellenstack vorgesehen ist, der über einen Kühlflüssigkeits-Kreislauf mit Hilfe der Kühlerstruktur 1 gekühlt wird. Diese Kühlerstruktur 1 ist bspw. in Form eines im wesentlichen üblichen Luft-Wasser-Wärmeübertrager, insbesondere Wärmetauscher s, wie er in Form eines "Kühlers" zur Kühlung einer als "heutiges" KFZ-Antriebsaggregat fungierenden Brennkraftmaschine in mannigfachen Ausgestaltungen in Kraftfahrzeugen in deren Frontbereich verbaut ist, ausgebildet, an welchem Einbauort die Kühlerstruktur 1 besonders gut vom Fahrtwind des bewegten Kraftfahrzeugs angeströmt wird. Die Anströmrichtung der die Kühlerstruktur 1 unter anderem bei Fahrt des Fahrzeugs durchströmenden Umgebungsluft ist dabei durch einen Pfeil 2 dargestellt, woraus erkennbar ist, dass die Anströmfläche 1a der Kühlerstruktur 1 bezüglich der Umgebungsluft 2 (die Bezugsziffer 2 wird auch für Umgebungsluft verwendet) ebenso wie die rückwärtige Abströmfläche 1b der Kühlerstruktur 1 auf der Zeichenebene senkrecht stehen.

Durch die Kühlerstruktur 1 kann somit Umgebungsluft gemäß Pfeil 2 bzw. Pfeil D (D = Durchströmrichtung) hindurch strömen und dabei Wärme von einem nicht gezeigten Wärmeträgermittel (vorzugsweise wird Wasser mit einem Frostschutzmittel versetzt als Wärmeträger oder Kühlmittel verwendet), welches mit der Umgebungsluft 2 im Wärmetausch stehend ebenfalls durch die Kühlerstruktur 1 hindurch geführt ist, aufnehmen. Dabei ist die Kühlerstruktur 1 wie grundsätzlich bekannt aufgebaut, was in den vorliegenden Figuren der Einfachheit halber nicht detailliert dargestellt ist; im wesentlichen ist die Kühlerstruktur 1 durch eine Vielzahl geeignet geführter Rohre, in denen das Wärmeträgermittel strömt und an denen einer Vielzahl von Rippen vorgesehen sind, über die die Umgebungsluft 2 als Kühlluft strömt, gebildet.

Figürlich dargestellt sind jedoch mehrere an die Kühlerstruktur 1 herangeführte Rohre 3, die vorliegend für jedes Ausführungsbeispiel im wesentlichen vertikal ausgerichtet sind, was jedoch auch andersartig gestaltet sein kann. In den Figuren sind diese Rohre 3 jedoch der besseren Erkennbarkeit wegen leicht perspektivisch bzw. geneigt dargestellt. In diesen Rohren 3, die bezüglich des darin geführten Mediums zueinander parallel geschaltet sind, ist der Abluftstrom des genannten Brennstoffzellenstacks geführt, d.h. in jedem einzelnen Rohr 3 strömt ein entsprechender Anteil des gesamten Abluftstromes des im Fahrzeug vorgesehenen Brennstoffzellenstacks. Es sind in diesen Rohren 3 bzw. in deren Rohrwänden eine Vielzahl von Austrittsöffnungen 4 solchermaßen angeordnet vorgesehen, dass aus jeder Austrittsöffnung 4 ein geringer Teilstrom von Brennstoffzellen-Abluft gemäß Pfeil 5 aus dem jeweiligen Rohr 3 austritt. Im weiteren wird die Bezugsziffer 5 auch für die Brennstoffzellen-Abluft selbst verwendet.

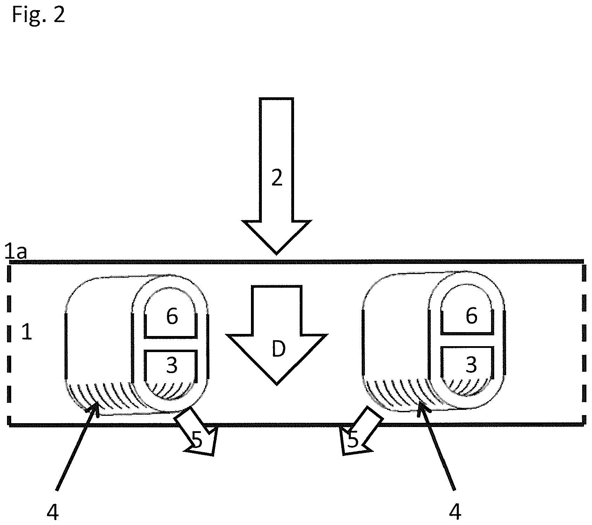

Bei den Ausführungsbeispielen nach Fig.1 und Fig.2 sind die Rohre 3 innerhalb der Kühlerstruktur 1 angeordnet und es ist somit die aus den Austrittsöffnungen 4 der Rohre 3 austretende Brennstoffzellen-Abluft 5 solchermaßen in die Kühlerstruktur 1 hinein geführt, dass dieser Abluftstrom 5 nach dem Strahlpumpen-Prinzip ein die Umgebungsluft zumindest anteilig durch die Kühlerstruktur 1 gemäß Pfeil D (Strömungsrichtung D) förderndes Druckgefälle hervorruft. Die unter Überdruck gegenüber dem Umgebungsdruck aus den Rohren 3 über die geeignet orientierten Austrittsöffnungen 4 austretende Brennstoffzellen-Abluft 5 strömt dabei zur Abströmfläche 1b der Kühlerstruktur 1 und reißt dabei auch Umgebungsluft 2 gemäß Pfeil D durch die Kühlerstruktur 1 hindurch mit, und zwar unter Nutzung des Strahlpumpen-Prinzips. Damit wird zumindest eine geringere Förderleistung für eine üblicherweise noch vorzusehende, hier jedoch nicht dargestellte Fördervorrichtung für einen Umgebungsluftstrom 2 durch die Kühlerstruktur 1 hindurch benötigt. (Gegebenenfalls ist aber überhaupt keine weitere Fördervorrichtung für Umgebungsluft als die Kühlerstruktur 1 durchströmende Kühlluft erforderlich).

Vorteilhafterweise wird innerhalb der Kühlerstruktur 1 die in diese hinein geführte Brennstoffzellen-Abluft 5 gleichzeitig mit der durchströmenden Umgebungsluft 2 vermischt und damit verdünnt, so dass selbst dann, wenn die Brennstoffzellen-Abluft 5 zuvor nicht - wie weiter oben fakultativ beschrieben - abgekühlt wird, keine Nebelbildung durch Auskondensieren der in der Brennstoffzellen-Abluft 5 enthaltenen Feuchtigkeit stattfindet.

Während bei der Ausführungsform nach Fig.1 der Abluftstrom 5 des Brennstoffzellenstacks in eigenständigen Rohren 3 in die Kühlerstruktur 1 hinein geführt ist, sind beim Ausführungsbeispiel nach Fig. 2 die Rohre 3 mit Rohrleitungen 6, in denen das bereits genannte Wärmeträgermittel (= "Kühlflüssigkeit") durch die Kühlerstruktur 1 geführt ist, als Baueinheit ausgebildet. Diese Baueinheit stellt zwei nebeneinander liegende und strömungstechnisch voneinander getrennte Rohre dar, nämlich jeweils ein Rohr 3 für den Abluftstrom 5 und eine Rohrleitung 6 für das in der Kühlerstruktur 1 (durch die gemäß Pfeil D hindurch strömende Umgebungsluft 2) zu kühlende Wärmeträgermittel.

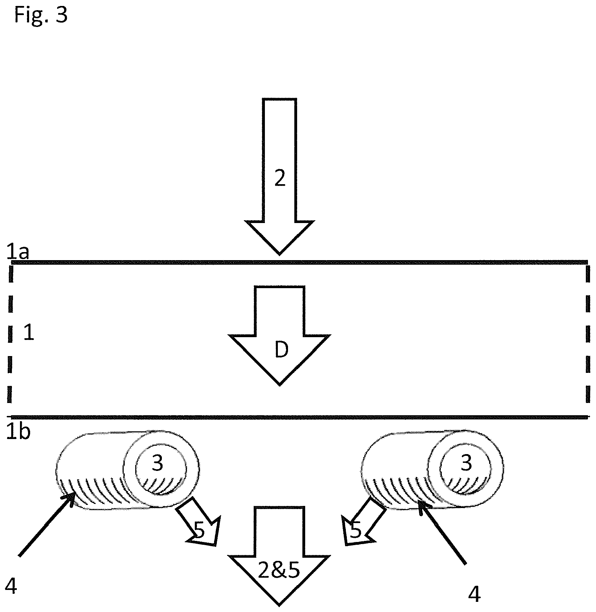

Beim Ausführungsbeispiel nach Fig. 3 ist der Abluftstrom 5 hinter die Kühlerstruktur 1 (in Durchströmrichtung D der Umgebungsluft 2 betrachtet) geführt, d.h. die hier abermals vorgesehenen Rohre 3 mit den Austrittsöffnungen 4 zur Führung und Abgabe des Brennstoffzellen-Abluftstromes 5 befinden sich nahe der rückwärtigen Abströmfläche 1b der Kühlerstruktur 1. Auch in diesem Bereich kann der Abluftstrom 5 an der Kühlerstruktur 1 ein die Umgebungsluft 2 zumindest anteilig durch die Kühlerstruktur 1 förderndes Druckgefälle hervorrufen.

Figürlich nicht dargestellt ist im übrigen eine weiter oben beschriebene vorteilhafte Weiterbildung, wonach der Austrittsquerschnitt und/oder die Austrittsrichtung der Austrittsöffnungen 4 beispielswiese mittels geeigneter Dreh-Schieber gezielt veränderbar ist. Ebenso figürlich nicht dargestellt ist eine Ausführungsform eines Rohres 3 mit einer einzigen sich in Richtung der Rohrlängsachse nahezu über die gesamte Kühlerstruktur 1 beispielsweise in Form eines Schlitzes erstreckenden Austrittsöffnung für den Abluftstrom 5.

## Patentansprüche

1. Abluftführung eines Brennstoffzellenstacks, insbesondere für ein Kraftfahrzeug, mit einer zur Funktionsumgebung des Brennstoffzellenstacks gehörenden Kühlvorrichtung in Form einer von Umgebungsluft (2) durchströmten Kühlerstruktur (1), wobei die Kühlvorrichtung eingerichtet ist, den Brennstoffzellenstack zu kühlen, wobei zumindest ein Teil der Abluft (5) des Brennstoffzellenstacks solchermaßen in die Kühlerstruktur (1) oder in Durchströmungsrichtung der Umgebungsluft (2) durch die Kühlerstruktur (1) betrachtet hinter die Kühlerstruktur (1) geführt ist, dass dieser Abluftstrom (5) an der Kühlerstruktur (1) nach dem Strahlpumpen-Prinzip eine Erhöhung des Massenstroms der Umgebungsluft (2) durch die Kühlerstruktur (1) hervorruft und
wobei die Abluft (5) des Brennstoffzellenstacks dabei nicht solchermaßen vor die genannte Kühlerstruktur (1) geführt ist, das diese in Durchströmungsrichtung durch die Kühlerstruktur (1) strömt und dabei nach dem Strahlpumpen-Prinzip Umgebungsluft (2) mitreißt.

2. Abluftführung nach Anspruch 1, wobei der Abluftstrom (5) vor der Heranführung an die Kühlerstruktur (1) abgekühlt wird.

3. Abluftführung nach Anspruch 1 oder 2, wobei der Abluftstrom (5) in mehreren zumindest annähernd parallel zur Anströmfläche (1a) oder Abströmfläche (1b) der Kühlerstruktur (1) ausgerichteten Rohren (3) in oder hinter die Kühlerstruktur (1) geführt ist, aus denen der Abluftstrom (5) über Austrittsöffnungen (4) in der Rohrwand, die unter einem geeigneten Winkel zur Durchströmungsrichtung (D) liegen, austritt.

4. Abluftführung nach einem der vorangegangenen Ansprüche, wobei die Strömungsgeschwindigkeit und/oder Strömungsrichtung des Abluftstroms (5) gegenüber der Kühlerstruktur (1) gezielt veränderbar ist, insbesondere indem die Austrittsöffnungen (4) in der Rohrwand der besagten Rohre (3) mittels eines Schiebers oder dgl. veränderbar sind.

5. Abluftführung nach Anspruch 3 oder 4, wobei die den Abluftstrom (5) in die Kühlerstruktur (1) führenden Rohre (3) mit den eine Kühlflüssigkeit in der Kühlerstruktur (1) führenden Rohrleitungen (6) zumindest abschnittweise eine Baueinheit bilden.

## Claims

1. An exhaust air guide of a fuel cell stack, more especially for a motor vehicle, comprising a cooling device, belonging to the functional environment of the fuel cell stack, in the form of a cooler structure (1) through which ambient air (2) is passed, wherein the cooling device is designed to cool the fuel cell stack, wherein at least some of the exhaust air (5) of the fuel cell stack is guided into the cooler structure (1) or downstream of the cooler structure (1) as considered in the throughflow direction of the ambient air (2) through the cooler structure (1), in such a way that this exhaust air flow (5), at the cooler structure (1), causes an increase in the mass flow of the ambient air (2) through the cooler structure (1) in accordance with the jet pump principle, and
wherein the exhaust air (5) of the fuel cell stack is not guided before the aforesaid cooler structure (1) in such a way that it flows through the cooler structure (1) in the throughflow direction and in so doing entrains ambient air (2) in accordance with the jet pump principle.

2. An exhaust air guide according to claim 1, wherein the exhaust air flow (5) is cooled before it is conducted into the cooler structure (1).

3. An exhaust air guide according to claim 1 or 2, wherein the exhaust air flow (5) is guided in or downstream of the cooler structure (1) in a plurality of pipes (3) oriented at least approximately parallel to the inflow surface (1a) or outflow surface (1b) of the cooler structure (1), and the exhaust air flow (5) exits from said pipes via exit openings (4) in the pipe wall, which are arranged at a suitable angle to the throughflow direction (D).

4. An exhaust air guide according to any one of the preceding claims, wherein the flow rate and/or flow direction of the exhaust air flow (5) relative to the cooler structure (1) can be deliberately varied, more especially by changing the exit openings (4) in the pipe wall of said pipe (3) by means of a slide or the like.

5. An exhaust air guide according to claim 3 or 4, wherein the pipes (3) leading the exhaust air flow (5) into the cooler structure (1) form a structural unit, at least in portions, together with the pipelines (6) guiding cooling liquid in the cooler structure (1).

## Revendications

1. Système de guidage d'air évacué d'un bloc de cellules électrochimiques, en particulier destiné à un véhicule, comprenant un dispositif de refroidissement faisant partie de l'environnement fonctionnel du bloc de cellules électrochimiques réalisé sous la forme d'une structure de refroidissement (1) traversée par l'air ambiant (2), le dispositif de refroidissement étant susceptible de refroidir le bloc de cellules électrochimiques, au moins une partie de l'air (5) évacué du bloc de cellules électrochimiques étant transféré dans la structure de refroidissement (1) ou par rapport à la direction de circulation de l'air ambiant (2) au travers de la structure de refroidissement (1), à l'arrière de cette structure de refroidissement (1) de sorte que le flux d'air évacué (5) provoque, sur la structure de refroidissement (1) selon le principe des pompes à jet une augmentation du débit massique de l'air ambiant (2) au travers de la structure de refroidissement (1), et
l'air (5) évacué du bloc de cellules électrochimiques n'est pas transféré à l'avant de la structure de refroidissement (1) de sorte que celui-ci circule dans la direction de circulation au travers de la structure de refroidissement (1) et entraîne ainsi l'air ambiant (2) selon le principe des pompes à jet.

2. Système de guidage d'air évacué, conforme à la revendication 1, dans lequel le flux d'air évacué (5) est refroidi avant d'être transféré jusqu'à la structure de refroidissement (1).

3. Système de guidage d'air évacué, conforme à la revendication 1 ou 2, dans lequel le flux d'air évacué (5) est transféré dans ou à l'arrière de la structure de refroidissement (1) dans plusieurs tubes (3) orientés au moins essentiellement parallèlement à la surface d'entrée (1a) ou à la surface d'évacuation (1b) de la structure de refroidissement (1), et à partir desquels le flux d'air évacué (5) sort par des ouvertures de sortie (4) dans la paroi tubulaire, qui font un angle adapté par rapport à la direction de circulation (D).

4. Système de guidage d'air évacué, conforme à l'une des revendications précédentes dans lequel la vitesse de circulation et/ou la direction de circulation du flux d'air évacué (5) par rapport à la structure de refroidissement (1), peut(peuvent) être modifiée(s) de manière ciblée, en particulier en modifiant les ouvertures de sortie (4) situées dans la paroi enveloppe des tubes (3) au moyen d'un tiroir ou similaire.

5. Système de guidage d'air évacué, conforme à la revendication 3 ou 4, dans lequel les tubes (3) transférant le flux d'air évacué (5) dans la structure de refroidissement (1) forment au moins par segments une unité structurelle, avec les conduites tubulaires (6) transférant un fluide de refroidissement dans la structure de refroidissement (1).
